# EUROPEAN PATENT APPLICATION

(11) **EP 4 834 746 A1**
(43) Date of publication of application: **04.11.2026**
(21) Application number: 25173452.1
(22) Date of filing: 30.04.2025
(51) Int. Cl.: B64C 1/06, B64D 37/04, B64D 37/30

(54) **FUSELAGE AND AIRCRAFT WITH HYDROGEN TANK**

(71) Applicant: AIRBUS Operations GmbH, 21129 Hamburg (DE)
(72) Inventor: Siemann, Martin, 21129 Hamburg (DE)

(57) **Abstract**

Disclosed is a fuselage 100, 100' of or for an aircraft. The fuselage comprises a shell 10, 10', a hydrogen tank 20, 20', and a support structure 30, 30' supporting at least a portion of the hydrogen tank 20, 20' towards a bottom of the shell 10, 10'. To at least partly absorb energy, the support structure 30, 30' comprises one or several shrinkable strut/s 31, 31' respectively being shrinkable in length and/or one or several pivotable strut/s 33, 33' respectively being pivotable relative to the hydrogen tank 20, 20'. The fuselage may further comprise at least one tension absorber (37, 37'), at least one hinge (34, 34') preferably constructed as a rotational bearing mode absorber, and/or at least one energy absorption cushion (40, 40').

Further disclosed is an aircraft comprising such fuselage.

## Description

The present invention concerns a fuselage comprising a shell and at least one hydrogen tank. The invention further concerns an aircraft comprising such fuselage.

Aircraft typically comprise one or more fuel tank/s containing a fuel to be supplied to the aircraft's one or several propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction, alternative propulsion systems for aircraft have been researched for. In this respect, hydrogen/electric aircraft engines, any propulsion engine which includes piston engines, turbine engines of any architecture, and fuel cell powered electrical propulsion motors have emerged as a promising possibility, for instance. In particular, turbo fans and fuel cells/ electric engines respectively powered by hydrogen are being developed and improved as aircraft engines.

The hydrogen employed in such aircraft can be stored and transported in its liquid state in hydrogen tanks (being pressurised vessels configured to contain liquid hydrogen) carried by the respective aircraft.

It is an object of the present invention to provide a fuselage comprising a hydrogen tank and accomplishing an advantageous crashworthiness. It is a further object to provide an aircraft comprising such fuselage.

The objects are achieved with a fuselage according to claim 1 and with an aircraft according to claim 15. Advantageous embodiments are disclosed in the dependent claims, the description, and the drawings.

A fuselage according to the present invention forms part of an aircraft or is designated to form part of an aircraft. It comprises a shell, a hydrogen tank, and a support structure configured to support the hydrogen tank, or a portion thereof, within the shell at least towards a bottom thereof, thus, in particular in vertical direction; as is to be noted, unless otherwise noted, references to directions or orientations in this text always relate to a fuselage orientation as designated for normal flight.

The support structure of a fuselage according to the present invention is configured to at least partly absorb an energy, in particular, at least a part of a shell deforming energy in case of a potential crash scenario. The energy absorption is realised by the support structure comprising at least one strut/s which is shrinkable in length (such strut/s further referred to herein as "shrinkable" strut/s), and/or by the support structure comprising at least one strut/s which is pivotable relative to the hydrogen tank (such strut/s further referred to herein as "pivotable" strut/s). In particular, the support structure may comprise at least one shrinkable strut which is also pivotable relative to the hydrogen tank.

The fuselage according to the present invention thus provides the support structure with a multi-functionality: Indeed, the support structure implements, further to the function of supporting and thus stabilising the hydrogen tank within the shell under normal operation, an advantageous crash concept according to which some, preferably even a majority of energy can be absorbed in a potential crash scenario. Therein, the support structure with the shrinkable and/or pivotable strut/s facilitates an easy construction and - if required - a simple repair, as its modular design allows for an adaptation to the respective size, shape (e. g. cylindrical, conical) and location (e. g., forward or aft tank in a possible tandem configuration) of the hydrogen tank. For instance, in embodiments with two hydrogen tanks, a support structure of a forward hydrogen tank may comprise a tension absorber arranged below the hydrogen tank as detailed below, whereas the support structure of an aft hydrogen tank may be devoid of a tension absorber below the aft hydrogen tank. Moreover, the support structure with its shrinkable and/or pivotable strut/s may spare space within the shell. The thus spared space may be used for other components of the fuselage. In particular, the fuselage according to advantageous embodiments may comprise one or several components of a route system, wherein the component/s may be at least partially arranged between the hydrogen tank and one or several of the (shrinkable and/or pivotable) struts of the support structure and/or between one or multiple frames of the shell and one or multiple of the (shrinkable and/or pivotable) struts of the support structure.

The hydrogen tank of a fuselage according to the present invention may be a discrete (pressure) vessel and thus non-integral, or it may be partially integral and thus partially delimited by components (such as a portion of the shell) having a further function in the fuselage. In case of such integral tank, the support structure may in particular support, as said portion of the hydrogen tank, a bulkhead delimiting the hydrogen tank in or opposite to a designated flying direction of the fuselage.

Preferably, the hydrogen tank is arranged in an aft portion of the fuselage.

As is to be understood, said hydrogen tank may be a first hydrogen tank, and the fuselage may comprise at least one further hydrogen tank which may have a same or a different design as/than the first hydrogen tank. The support structure in these cases may be configured to support both at least a portion of the first hydrogen tank and at least a portion of the further hydrogen tank. As a further possibility, the support structure may be a first support structure, and the fuselage may comprise at least one further hydrogen tank configured to support at least a portion of the further hydrogen tank. In such case, the further support structure may have a same or a different design as/than the first support structure. In particular, the further support structure may or may not be configured to absorb energy in accordance with any one of the embodiments described herein.

According to advantageous embodiments of the present invention, the support structure comprises one or multiple hinge/s. Any one of such hinge/s may advantageously connect a respective pivotable strut of the support structure with the hydrogen tank and/or with another one of the struts. In particular, it may provide for the pivotability of the respective pivotable strut and, thereby, for the at least partial absorption of energy. Preferably, the support structure comprising such at least one hinge is configured to absorb up to 20% or up to 36% of the total kinetic energy by means of the one or multiple hinge/s.

Such hinge may preferably be constructed as a rotational bearing mode absorber. Such absorbers are known in the art and disclosed, e.g., in EP24159051. They are based on a pin/bolt being pulled through a material whose deformation or structural failure in case of a potential crash scenario absorbs energy. Accordingly, in such embodiments, the respective hinge absorbs at least a portion of the energy.

The hinge or, in embodiments with multiple hinges, at least one of the hinges may advantageously be fastened to a respective rib of the hydrogen tank. Thereby, a particularly stable connection to the hydrogen tank can be achieved.

According to advantageous embodiments, at least one of the shrinkable struts possibly comprised by the support structure may include a compressible portion. The compressible portion may be made of an energy absorption structure (such as a foam and/or a lattice), and/or it may contain a material configured to be extracted, under pressure, out of an interior space of the respective strut, such as through one or multiple holes in a sheath the respective strut may comprise. The respective shrinkable strut may be entirely constituted by the compressible portion, or it may include, further to said compressible portion, an incompressible portion, thus, a portion configured to transmit energy rather than to absorb it. In particular in embodiments where the respective shrinkable strut is connected to various components such as to two or more further struts of the support system, such incompressible portion may provide for a preservation of distances even in case of a potential crash and, thereby, for a predetermined deformation behaviour.

Additionally or alternatively, the support structure may comprise one or multiple strut/s which is/are incompressible over its/their entire length; such struts are further referred to herein as "rigid" struts. In respective embodiments, in particular the one or at least one of the several pivotable strut/s may respectively be configured as a rigid strut.

According to advantageous embodiments, the support structure comprises both one or multiple shrinkable strut/s and one or multiple pivotable (preferably also rigid) strut/s. In such case, the one pivotable strut or at least one of the multiple pivotable struts may preferably link at least one of the shrinkable strut/s with the hydrogen tank, such as via at least one respective hinge and/or via a respective fitting. In case several pivotable struts of the support structure link a respective shrinkable strut with the hydrogen tank, at least two of the linking pivotable struts may advantageously run parallel to each other, preferably even when pivoting relative to the hydrogen tank under the energy.

Such embodiments facilitate a predetermined transfer and/or distribution of the energy between the respective components of the support structure. Thereby, a protection of the hydrogen tank can be optimised.

According to advantageous embodiments, the hydrogen tank comprises a tank wall extending, within the shell of the fuselage, in longitudinal direction of the fuselage. With respect to the fuselage's orientation designated for normal flight, one or multiple of the shrinkable and/or of the pivotable struts may then be coupled laterally to the tank wall, such as by means of brackets or tank ribs, for example. Therein, a such laterally coupled (shrinkable and/or pivotable) strut may preferably be arranged so as to run, with its length, tangentially to the tank wall.

The lateral coupling in such case facilitates an advantageously large strut length due to which a buffering effect resulting from a shrinking or from a pivoting can be improved.

The support structure may preferably comprise at least one shrinkable strut and/or at least one pivotable strut respectively being arranged so as to direct (in its length) downwards. Therein, when the fuselage adopts its orientation designated for normal flight, the respective strut/s may run vertically, or inclined to a vertical plane including a longitudinal centre axis of the shell; in the latter case, following the downward direction, the respective strut/s may approach said vertical plane or run away from it.

Said downward directing strut/s are particularly advantageous to absorb the energy acting on the bottom of the shell.

The strut/s directing downward may in particular be laterally coupled to a tank wall and/or comprise a compressive portion, as respectively mentioned above. Several (shrinkable and/or pivotable) struts directed downwards may be interconnected by at least one beam. Thereby, an advantageous load distribution and thus higher robustness of the crash concept may be achieved. Such beam/s may in particular run in longitudinal direction of the fuselage and/or alongside the hydrogen tank. It/they may form part of a tank reinforcement structure of the hydrogen tank, or of a shell reinforcement structure to which a skin of the shell may be attached.

With regard to the fuselage's orientation designated for normal flight, at least two of the (shrinkable and/or pivotable) struts of the support structure may preferably be arranged symmetrically to each other with respect to a vertical plane, in particular to a vertical plane including a longitudinal centre axis of the shell.

According to advantageous embodiments, the support structure further comprises at least one tension absorber configured to stretch under the triggering load. Such tension absorber may preferably be arranged at least partially below the hydrogen tank (thus, between the hydrogen tank and a bottom of the shell). It may include a net configured to catch the hydrogen tank when this approaches the bottom of the shell due to an ovalisation of the shell in a potential crash scenario. The tension absorber may in particular comprise a plurality of criss-crossing (preferably woven) belts sewn together, preferably in seams configured to burst when the tension absorber undergoes a stretching force exceeding a predetermined strength.

By the at least one tension absorber, the support structure can be enhanced by a particularly space saving means providing further energy absorption functionality. The at least one tension absorber may advantageously be linked to the hydrogen tank via at least one pivotable strut of the support structure. In such case, the pivotable strut/s may be configured to cause, by their pivoting, the stretching of the respective tension absorber. In particular, the tension absorber may be linked to the hydrogen tank via to at least two pivotable struts configured to pivot, under the triggering energy, in different, preferably opposite directions.

Preferably, the tension absorbers are dominantly stretched in y-direction but for robustness/ resilience, they may be interconnected in x-direction thus forming a net. According to advantageous embodiments, the tension absorber/s is/are attached to the shell, preferably on the fuselage's sides (principle of a hammock), in particular, to at least one frame of the shell. The stretching of the tension absorbers can then be achieved by contact of the tank with the tension absorber/s. In these cases, the tension absorber/s can work independently of the pivotably strut/s, at least to some extent.

According to advantageous embodiments comprising at least one such tension absorber, the support structure may be configured to at least partly absorb the energy by a shrinking of the shrinkable strut/s and/or a pivoting of the pivotable strut/s respectively being at least started before the stretching of the tension absorber begins. Thereby, a cascaded energy absorption can be realised which may allow for reduced repair efforts in cases in which the fuselage has experienced only minor crash loads.

According to advantageous embodiments, the fuselage comprises one or multiple energy absorption cushion/s respectively including a foam, a lattice structure, and/or an auxetic structure. Such energy absorption cushion/s may preferably be arranged between the hydrogen tank and a bottom of the fuselage's shell. It may be configured to be compressed by the hydrogen tank being vertically displaced in consequence of a potential crash of the fuselage. It thus may provide an additional support of the tank in vertical direction over a large surface. Moreover, such energy absorption cushion may advantageously help to avoid that components of the lower fuselage penetrate into the tank. The cushion furthermore enables a load redistribution, which improves the crashworthiness in case of rather local crash loads, which through the cushion may be distributed over a larger area of the tank.

The at least one energy absorption cushion of such embodiments may at least form part of a continuous vertical connection of the bottom of the shell with the hydrogen tank. For instance, it may vertically connect the bottom of the shell with the hydrogen tank and/or, if present, with the/a tension absorber the support structure may comprise.

Alternatively, the at least one energy absorption cushion may be arranged so as to leave a gap between the energy absorption cushion and the hydrogen tank, the gap inhibiting contact of the energy absorption cushion and the hydrogen tank contact under normal operation (where the structure and the tank may also deform in an elastic range). Such gap may have, for example, a vertical extension of at least 10 mm or at least 50 mm, and/or of at most 150mm or at most 100 mm, for example. The gap may advantageously allow for a free motion of the hydrogen tank in a first stage of a potential crash scenario. It may thus delay an activation of the energy absorption cushion, in a potential crash scenario.

In particular, by means of the gap, the support structure may be configured to at least partly absorb the energy, realised by said shrinking and/or said pivoting of said one or several of the struts, in said first stage of the potential crash scenario in which the energy absorption cushion may still remain inactive. This may provide for the advantage that, in a potential crash scenario, first the cushion may be crushed, and then in a second stage, the other energy absorption means may become active. This may allow for an easier repair in case of a tail strike, where only the cushion and the lower shell may be damaged but not the tank support structure.

According to advantageous embodiments, the shell may comprise, at its bottom, a detachable access panel which may preferably serve to install and/or deinstall the hydrogen tank. The detachable access panel may comprise a frame configured to transfer vertical loads into the support structure, such as, in respective embodiments, into one or multiple downwards directing (shrinkable and/or pivotable) struts thereof.

In embodiments further comprising an energy absorption cushion as mentioned above, this may be attached to the detachable access panel. Thereby, an easy access to the hydrogen tank and to the support structure may be provided, as the energy absorption cushion may easily be removed together with the detachable access panel thus be prevented to obstruct the access.

An aircraft according to the present invention comprises a fuselage according to an embodiment of the present invention. In addition, the aircraft preferably comprises in particular at least two wings extending from the fuselage, an empennage, and/or an undercarriage.

Particularly preferred are embodiments of the present invention which comprise, further to the shrinkable strut/s and/or the pivotable strut/s, one or multiple hinge/s constructed as a rotational bearing mode absorber, at least one tension absorber and an energy absorption cushion as described herein.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure, and the same holds for evident analogies between the figures.

Shown are schematically in
- Fig. 1a:: a fuselage according to a first exemplary embodiment of the present invention in a cross section and in an undamaged state;
- Fig. 1b:: the fuselage of Figure 1a after a potential crash has occurred;
- Fig. 2:: a fuselage according to a second exemplary embodiment of the present invention in a cross section and in an undamaged state;
- Fig. 3:: the fuselage of Figure 1a with indication of a region of the support structure;
- Fig. 3a:: details of the support structure in the region indicated in Figure 3;
- Fig. 3b:: a first alternative to the details of Figure 3a;
- Fig. 3c:: a second alternative to the details of Figure 3a; and
- Fig. 4:: a possible design of a hinge constructed as a rotational bearing mode absorber.

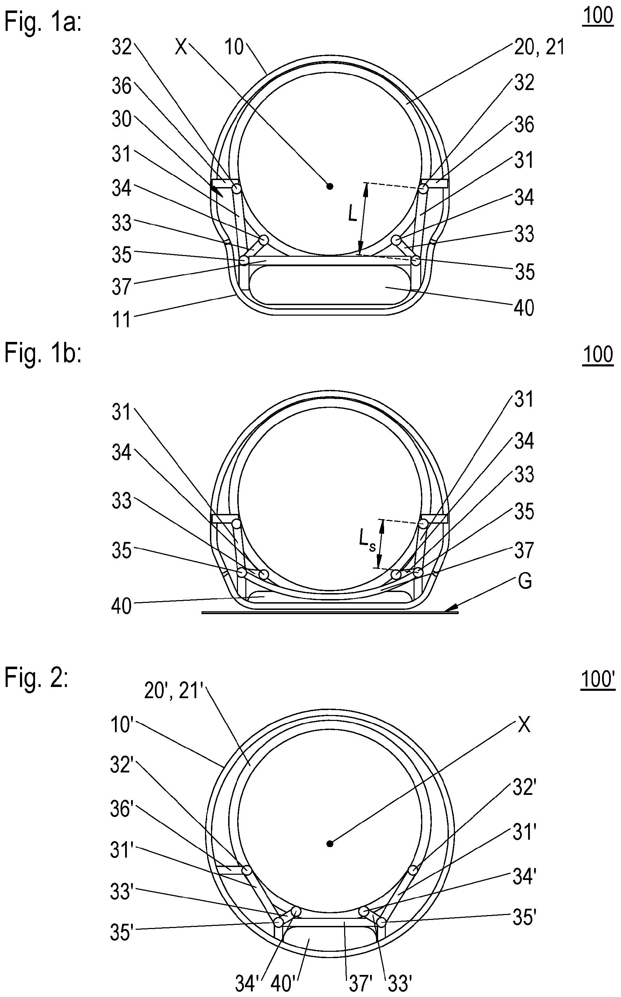

Figures 1a, 1b each depict a fuselage 100 according to an exemplary embodiment of the present invention in a cross section orthogonal to a longitudinal centre axis X of the fuselage and in an orientation designated for normal flight. Therein, Figure 1a illustrates the fuselage 100 in an undamaged sate, whereas Figure 1b illustrates the fuselage 100 after a potential crash scenario in which a bottom of the shell 10 of the fuselage has been deformed due to crashing to the ground G.

Further to said shell 10, the fuselage 100 comprises a hydrogen tank 20 which in this case is a non-integral hydrogen tank with a tank wall 21 extending, within the shell 10, in longitudinal direction of the fuselage 100.

In the embodiment shown in Figures 1a, 1b, the shell 10 comprises, at its bottom, a detachable access panel 11 providing, when detached, access to the interior of the shell 10. In particular, the hydrogen tank 20 may have been installed through the detachable access panel 11, and the detachable access panel 11 may further serve to (later one) reversely deinstall the hydrogen tank 20 from the shell 10 (not shown) for maintenance purposes, for example.

The fuselage 100 further comprises a support structure 30 which supports the hydrogen tank 20, in particular the tank wall 21 thereof, towards the bottom of the shell 10. The support structure comprises shrinkable struts 31 and pivotable struts 33.

Therein, two shrinkable struts 31 are visible in Figures 1a, 1b. These shrinkable struts 31 are laterally coupled to the tank wall 21 by respective fastening means 32, and they are arranged symmetrically to each other with respect to an abstract vertical plane (not shown) containing the longitudinal centre axis X of the shell.

The shrinkable struts 31 direct, with their respective length, downwards in a slightly inclined manner. Therein, they are arranged tangentially to the hydrogen tank 20.

In the embodiment shown in Figures 1a, 1b, at each side of the hydrogen tank 20 and positioned at the respective upper ends of the shrinkable struts 31, a respective lateral beam 36 runs in longitudinal direction of the fuselage 100 (in particular, parallel to the longitudinal centre axis X thereof). The lateral beams provide a lateral tank attachment (tank to fuselage). In longitudinal direction, there can be multiple frame stations where such lateral tank attachments may be placed.

In addition, there may be longitudinal beams (not shown) running along the tank and/or along the shell side and interconnecting the shrinkable struts. Thereby, locally introduced crash loads (e. g. only at one end of the tank section) can be distributed over more than one longitudinal attachment station / one set (set = LH/RH side) of shrinkable struts. The longitudinal beams provide an improved load distribution and avoid local overloading at one longitudinal support station of the tank. They may be placed overlapping with the fastening means 32 and/or the fittings 35.

Such longitudinal beams may connect the shrinkable struts 31 at one or both side/s of the hydrogen tank 20 with the shell 10. They may additionally connect the struts 31 with further (shrinkable and/or rigid) struts (not visible in the figures due to the sectional view) which may be arranged alongside the hydrogen tank 20, possibly parallel to a respective one of the shrinkable struts 31 visible in Figures 1a, 1b. Thereby, an advantageous load distribution and thus higher robustness of the crash concept may be achieved. In particular, said longitudinal beams may be placed at the respective upper ends of the shrinkable struts 31; additionally or alternatively, they might be positioned at the respective lower ends of the shrinkable struts.

As apparent from a comparison of Figure 1a with Figure 1b, in the state shown in Figure 1a, the struts 31 having a length L are shrinkable, whereas in the state illustrated in Figure 1b, they have a shrunk length L_{S}. The shrinkage contributed to the support structure 30 absorbing energy resulting from the fuselage's crash to the ground G.

The support structure 30 further comprises pivotable struts 33 and hinges 34 respectively connecting one of the pivotable struts 33 to the hydrogen tank 20. At their end opposite to the hydrogen tank 20, the struts 33 are connected, via a respective fitting 35 providing an external trigger, to a respective one of the shrinkable struts 31 and to a tension absorber 37 further comprised by the support structure 30. Optionally, the fittings 35 may connect the shrinkable struts 31 to a fuselage reinforcement structure (not shown), in particular, to a frame thereof.

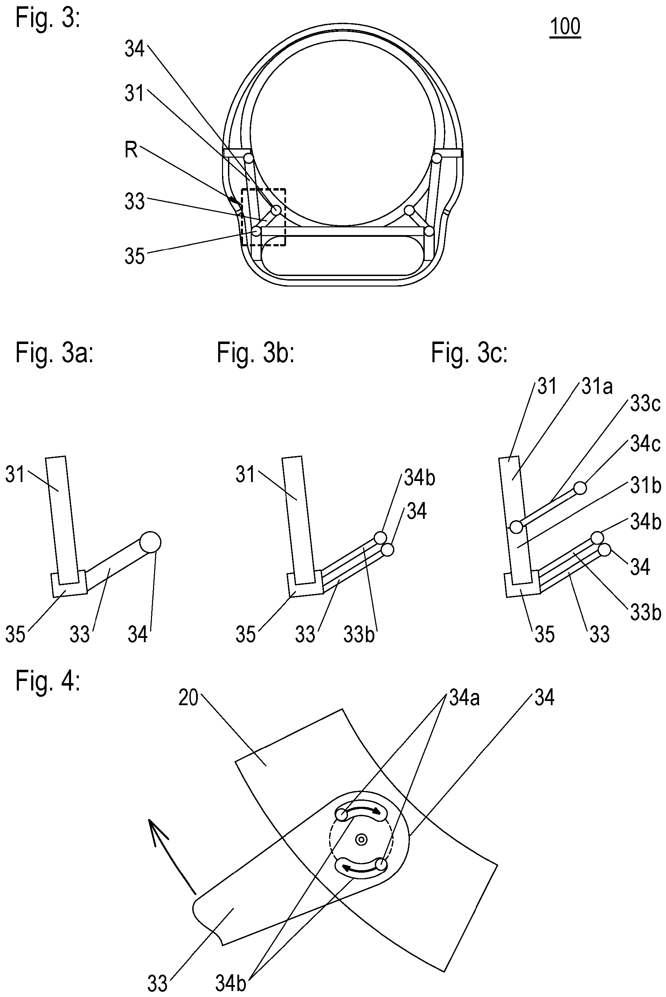

The hinges 34, which may be fastened to a respective rib (not visible in Figures 1a, 1b) of the hydrogen tank 20, preferably are constructed as rotational bearing mode absorbers (not visible in Figure 1a, 1b), as further detailed below with respect to Figure 4.

As apparent from a comparison of Figure 1a with Figure 1b, in the state shown in Figure 1a, the struts 33 are pivotable, and in the state illustrated in Figure 1b, they have pivoted, by means of the respective hinge 34, relative to the hydrogen tank 20, thereby stretching and thus activating the tension absorber 37.

In particular owing to the hinges 34 being configured as rotational bearing mode absorbers and/or due to the stretching of the tension absorber 37, the pivoting of the pivotable struts 33 contributed to the support structure 30 absorbing an energy resulting from the fuselage's crash to the ground G.

Below the hydrogen tank 20 and also below the tension absorber 37, the fuselage 100 shown in Figures 1a, 1b further comprises an energy absorption cushion 40. Such energy absorption cushion 40 may include a foam and/or a lattice structure and/or an auxetic structure. In the potential crash scenario resulting in the fuselage's 100 state shown in Figure 1b, the energy absorption cushion was compressed, and it touches the tension absorber 37.

In particular, Figure 1b shows that the crash concept realised by the fuselage 100 has been successful, as in spite of the crash and the resulting deformation of the shell 10, the hydrogen tank 20 has remained undamaged.

Figure 2 shows a fuselage 100' according to an alternative embodiment of the present invention in a cross section orthogonal to a longitudinal centre axis X of the fuselage 100', and in an orientation designated for normal flight.

The fuselage 100' comprises a shell 10' which at least in the region containing the section shown in Figure 2 may have a cylindrical or conical shape. Moreover, the fuselage 100' comprises a hydrogen tank 20' being a non-integral tank with a tank wall 21' extending, within the shell 10', in longitudinal direction of the fuselage 100'.

The fuselage 100' further comprises an energy absorption cushion 40', and a support structure 30' with shrinkable struts 31', fastening means 32', pivotable struts 33', hinges 34', fittings 35' and a tension absorber 37' which are arranged and configured to act analogously to the respective components shown in Figures 1a, 1b and described above, with the difference, however, that the shrinkable struts 31' are connected, by fastening means 32', to a lower lateral portion of the tank wall 21'. Due to their direction tangentially to the tank wall 21', they thus direct downwards in a more inclined manner than the shrinkable struts 31 of the fuselage 100 shown in Figures 1a, 1b.

Moreover, at one side, the tank 20' is seen to be connected to the shell 10' by a lateral beam 36', wherein unlike the embodiment shown in Figures 1a, 1b, no lateral beam is arranged in this embodiment to connect the tank 20' with the shell 10' at the opposite side. The omission of the beam at this side may allow for a detachable access panel (not shown) being in this case arranged laterally to the shell 10'.

In Figure 3, the fuselage 100 of Figure 1a is illustrated again, wherein a region R is indicated. Figure 3a provides a detail view of the shrinkable strut 31, the pivotable strut 33, the hinge 34 and the fitting 35 in said region R, whereas Figures 3b and 3c illustrate arrangements with several pivotable struts 33, 33b, 33c and several hinges 34, 34b, 34c, as might alternatively be arranged in said region R indicated in Figure 3.

Indeed, the alternative illustrated in Figure 3b comprises two parallel pivotable struts 33, 33b connecting the shrinkable strut 31 with the hydrogen tank (not shown in Figure 3b) via the fitting 35 at their one end and respective hinges 34, 34b at their respective other end.

The alternative depicted in Figure 3c comprises a further hinge 34c via which a further pivotable strut 33c connects the shrinkable strut 31 with the (not shown) hydrogen tank. The further pivotable strut 33c runs parallel to the pivotable struts 33, 33b connecting the fitting 35 with the hydrogen tank.

While the shrinkable struts 31 respectively shown in Figures 3a, 3b may be entirely constituted by a compressible portion thereof, the shrinkable strut 31 shown in Figure 3c comprises, further to a compressible portion 31a, an incompressible portion 31b.

The multiple rotating hinges 34, 34b, 34c of the arrangements respectively illustrated in Figures 3b, 3c allow for an increased energy absorption capacity. Therein, the pivotable struts 33, 33b, 33c are advantageously kept in parallelograms even under an extensive deformation (not shown). In the embodiment shown in Figure 3c, this may be ensured by the further pivotable strut 33c being fastened to the incompressible portion 31b (in the embodiment depicted: at an end thereof) of the shrinkable strut 31.

Figure 4 illustrates the concept of a hinge 34 being configured as rotational bearing mode absorber. The hinge 34 is based on pins 34a which in this case may be fastened to the hydrogen tank 20 and which are arranged in respective notches 34b formed in the pivotable strut 33 and running along respective arcs on a common circular orbit. According to alternative (not shown) embodiments, the rotational bearing mode absorber may comprise further pins arranged in respective notches which may run along respective arcs on one or multiple further, concentric orbits.

As illustrated in Figure 4 by arrows, when the pivotable strut 33 pivots, due to the triggering energy, relative to the hydrogen tank 20, the pins 34a are guided in the respective notches 34b which may contain and/or be bordered by a material configured to be deformed due to the pin 34a running along. Thereby, the pivoting may be obstructed, such that the hinge 34 absorbs at least some of the energy.

Disclosed is a fuselage 100, 100' of or for an aircraft. The fuselage comprises a shell 10, 10', a hydrogen tank 20, 20', and a support structure 30, 30' supporting at least a portion of the hydrogen tank 20, 20' towards a bottom of the shell 10, 10'. To at least partly absorb energy, the support structure 30, 30' comprises one or several shrinkable strut/s 31, 31' respectively being shrinkable in length and/or one or several pivotable strut/s 33, 33' respectively being pivotable relative to the hydrogen tank 20, 20'. The fuselage may further comprise at least one tension absorber (37, 37'), at least one hinge (34, 34') preferably constructed as a rotational bearing mode absorber, and/or at least one energy absorption cushion (40, 40').

Further disclosed is an aircraft comprising such fuselage.

### Reference signs

- 10, 10': shell
- 11: detachable access panel

- 20, 20': hydrogen tank
- 21, 21': tank wall

- 30, 30': support structure
- 31, 31': shrinkable strut
- 31a: compressible portion
- 31b: incompressible portion
- 32, 32': fastening means
- 33, 33': pivotable strut
- 34, 34': hinge
- 34a: pin
- 34b: notch
- 35, 35': fitting
- 36, 36': lateral beam
- 37, 37': tension absorber

- 40, 40': energy absorption cushion

- 100, 100': fuselage

- G: ground
- L: length of shrinkable strut
- L_{S}: shrunk length
- R: region
- X: longitudinal centre axis of the fuselage

## Claims

1. Fuselage (100, 100') of or for an aircraft, the fuselage comprising
- a shell (10, 10'),
- a hydrogen tank (20, 20'), and
- a support structure (30, 30') supporting at least a portion of the hydrogen tank (20, 20') towards a bottom of the shell (10, 10'),
wherein to at least partly absorb an energy, the support structure (30, 30') comprises
- one or several shrinkable strut/s (31, 31') respectively being shrinkable in length and/or
- one or several pivotable strut/s (33, 33') respectively being pivotable relative to the hydrogen tank (20, 20').

2. Fuselage according claim 1, wherein the support structure (30, 30') comprises one or several pivotable strut/s (33, 33') and one or multiple hinge/s (34, 34') respectively connecting at least one of the pivotable strut/s (33, 33') with the hydrogen tank (20, 20') and/or with another pivotable strut and/or with a shrinkable strut of the support structure (30, 30').

3. Fuselage according to claim 2, wherein the one hinge or at least one of the multiple hinges (34, 34'), respectively,
- is constructed as a rotational bearing mode absorber and/or
- is fastened to a respective rib of the hydrogen tank (20, 20').

4. Fuselage according to one of claims 2 or 3, wherein the one or at least one of the several pivotable strut/s (33, 33') links at least one shrinkable strut (31, 31') of the support structure (30, 30') with the hydrogen tank (20, 20') via at least one of the hinge/s (34, 34') and/or via a respective fitting (35, 35').

5. Fuselage according to one of the preceding claims, wherein the support structure (30, 30') comprises one or multiple shrinkable strut/s (31, 31') respectively including a compressible portion (31, 31', 31a) being made of an energy absorption structure and/or containing a material configured to be extracted, under pressure, out of an interior space of the compressible portion.

6. Fuselage according to one of the preceding claims, wherein the hydrogen tank comprises a tank wall (21, 21') extending, within the shell (10, 10'), in longitudinal direction of the fuselage, and wherein the support structure comprises at least one shrinkable strut (31, 31') and/or at least one pivotable strut (33, 33') respectively being coupled tangentially to a lateral part of the tank wall (21, 21').

7. Fuselage according to one of the preceding claims, wherein the support structure (30, 30') comprises several shrinkable struts (31, 31') and further at least one longitudinal beam running along the hydrogen tank (20, 20') and/or along the shell (10, 10') and interconnecting at least two of the shrinkable struts (31, 31').

8. Fuselage according to one of the preceding claims, wherein the support structure (30, 30') comprises
- at least one shrinkable strut and/or at least one pivotable strut arranged so as to direct, with its length, vertically downwards; and/or
- at least one shrinkable strut (31, 31') and/or at least one pivotable strut (33, 33') arranged so as to direct, with its length, downwards in an inclined manner respectively with regard to the fuselage's orientation designated for normal flight.

9. Fuselage according to one of the preceding claims, wherein the support structure (30, 30') further comprises at least one tension absorber (37, 37') arranged to stretch under the triggering load, the tension absorber (37, 37') preferably comprising a net of criss-crossing belts at least partially sewn together.

10. Fuselage according to claim 9,
- wherein the at least one tension absorber (37, 37') is linked to the hydrogen tank (20, 20') by one or several pivotable strut/s (33, 33') comprised by the support structure (30, 30'), and/or
- wherein the at least one tension absorber is laterally connected to the shell (10, 10'), such as to a frame thereof.

11. Fuselage according to one of claims 9 or 10, wherein the support structure 30 is configured to begin stretching the tension absorber (37, 37') after at least one shrinkable strut (31, 31') of the support structure (30, 30') has started to shrink in length and/or after at least one pivotable strut (33, 33') of the support structure (30, 30') has started to pivot relative to the hydrogen tank (20, 20').

12. Fuselage according to one of the preceding claims, further comprising an energy absorption cushion (40, 40') including a foam, a lattice structure, and/or an auxetic structure, the energy absorption cushion (40, 40') arranged between the hydrogen tank (20, 20') and a bottom of the fuselage's shell (10, 10').

13. Fuselage according to claim 12, wherein the energy absorption cushion (40, 40') leaves a free gap between the hydrogen tank (20 20') and said bottom of the shell (10, 10').

14. Fuselage according to one of the preceding claims, further comprising one or several components of a route system, the component/s at least partially arranged
- between the hydrogen tank (20, 20') and at least one shrinkable strut (31, 31') and/or at least one pivotable strut (33, 33') of the support structure and/or
- between one or multiple frames of the shell (10, 10') and at least one shrinkable strut (31, 31') and/or at least one pivotable strut (33, 33') of the support structure.

15. Aircraft comprising a fuselage (100, 100') according to one of the preceding claims.
